# EUROPEAN PATENT SPECIFICATION

(11) **EP 3 695 039 B1**
(45) Date of publication and mention of the grant of the patent: **27.01.2021**
(21) Application number: 19713077.6
(22) Date of filing: 01.04.2019
(51) Int. Cl.: D04H 1/4374, B32B 5/02, B32B 5/06, B29C 70/02, D04H 1/74, D04H 3/05, E04D 5/10, E04D 12/00

(54) **REINFORCED NONWOVEN**
VERSTÄRKTER VLIESSTOFF
TISSU NON TISSÉ RENFORCÉ

(30) Priority: 03.04.2018 EP 18165406
(43) Date of publication of application: 19.08.2020
(73) Proprietor: POLITEX s.a.s. di FREUDENBERG POLITEX s.r.l., 22060 Novedrate (IT)
(72) Inventor: ROCCEHTTA, Luigi, 26822 Brembio (Lodi) (IT)
(74) Representative: Banse & Steglich Patentanwälte PartmbB
(86) International application number: PCT/EP2019/058148
(87) International publication number: WO 2019/192948

(56) References cited:
- WO-A1-98/06570
- WO-A1-2016/057927
- DE-A1- 2 622 206
- US-A- 1 914 801
- US-A- 3 314 841
- US-A- 3 686 062

## Description

The invention relates to a nonwoven fabric which is reinforced by a plurality of yarns which are embedded in the nonwoven fabric, wherein the nonwoven fabric comprises yarns which have a curved path. The nonwoven fabrics are especially suitable as supports for bituminous building materials. Subject of the invention are also methods for producing the nonwoven fabrics, uses of the nonwoven fabrics and building materials.

### State of the art

Nonwoven fabrics, which are reinforced with yarns or filaments, are used as substrates for impregnation with bitumen in the production of bituminous membranes for building applications. Such bituminous materials are used in various building applications, especially as roofing materials or geotextiles, in which they can serve as barrier layers, support layers, reinforcements, protective layers or the like.

Such building materials and nonwoven substrates must be highly stable under mechanical stress and under harsh conditions when in use, but also in the production process. In order to improve the mechanical strength of nonwovens for such applications, they can be reinforced with yarns or filaments. Typically, reinforced nonwovens comprise nonwoven layers, which are combined with yarn or filament networks or with parallel yarns. The reinforcements may be attached to the surface of the nonwoven or laminated between nonwoven layers.

WO 97/18364 relates to synthetic textile supports for bituminous sheaths based on nonwovens, which are reinforced by a plurality of continuous filaments arranged in parallel to one another in the longitudinal direction.

EP 1 046 742 A1 relates to substrates for bituminous roofing rolls based on nonwovens, which have reinforcement wires or filaments applied to their surface by needling.

US 5,390,399 discloses an apparatus for tacking a yarn in a predetermined pattern onto a needled fleece.

US 2004/0014388 A1 relates to a nonwoven product for use either in a geotextile or as a carrier for bituminous roofing materials, wherein a fleece is provided with reinforcing wires joined by a needling technique.

US 4,762,744 relates to a reinforcing composite for bituminous roofing membranes, which is a laminate of a first layer of an open network of continuous filaments and additional nonwoven layers.

US 2006/0154020 A1 relates to a reinforcing nonwoven base fabric comprising a plurality of reinforcing fiber yarns that are aligned in a fixed direction with fixed intervals in parallel to each other.

US 2005/0148250 A1 relates to a roofing membrane in the form of a laminate, which comprises a nonwoven polyester mat in combination with scrims having a net-like shape.

WO 2016/057927 relates to a composite sheet comprising a non-woven base material and an embedded mesh layer.

WO 98/06570 A1 discloses a bonded composite mesh structure formed of a woven textile. The weave patterns comprise yarns arranged in a twisted manner.

US 3,314,841 relates to a composite material comprising yarns. The yarns are referred to as a "non-woven", because they are not provided in the form of a pre-formed mesh, but arranged as warp and weft yarns during the production process. The warp and weft yarns are embedded between films or sheets. The document does not relate to nonwovens which are reinforced with yarns and methods for their production.

US 3,686,062 relates to a reinforced laminated sheet material comprising outer paper sheets and a layer of filaments in between. The document does not relate to nonwovens which are reinforced with yarns and methods for their production.

US 1,914,801 relates to devices for producing laminates from paper sheets and reinforcing threads or wires. The document does not relate to nonwovens which are reinforced with yarns and methods for their production.

DE 26 22 206A1 relates to a reinforced material, wherein parallel strands of glass fibre are bonded to a non-woven felting or mat of unorientated staple fibres, using an adhesive bonding agent to hold the layers together.

In the reinforced nonwoven composites described above, the reinforcing yarns or filaments are provided as parallel lines, scrims or nets. Generally, a reinforcement of parallel lines can increase the mechanical stability in the transverse direction. Composites reinforced with scrims or nets have increased mechanical strength in the machine direction and cross direction.

However, the materials of the state of the art have various disadvantages. At first, regular structures, such as parallel lines of yarns or scrims, usually provide enhanced mechanical strength in a traverse direction, which can be the machine and/or cross direction. This may reduce damages when the material is torn from the side. However, such reinforcements may not provide a high stability when a mechanical force is more diffuse. For example, it is a known problem in the technical field that the materials may be weakened at positions where a first punctiform damage occurs. This can happen when such materials are fixed with nails, screws, tackers or the like. Specifically, a material can be torn more easily at a site where a nail has been driven through. An indicator for stability after punctiform damage is the nail tear strength according to EN12310-1 from July 2001.

Further, since such materials are used and processed in the form of bands from rolls, a high elasticity is required. However, a strong reinforcement in a nonwoven often decreases the elasticity and flexibility of the material. Thus, known materials often do not have an adequate combination of high elasticity and high strength.

Further, known production processes for reinforced nonwovens are often relatively complicated. The fabrics are typically provided as laminates. Generally, lamination methods are relatively complicated, because they require a high number of process steps, including production of the layer, alignment and bonding. For example, a lamination process as described in US 2005/0148250 A1 requires pre-fabrication of all layers, precise alignment of the pre-formed layers and an efficient binding step, which connects all layers firmly. Therefore, it is difficult and labour extensive to produce such materials, especially in a continuous process. Further, such laminates comprising a large number of layers are often prone to delamination. This is a problem in building applications, where high stability is required when the materials are impregnated with bitumen at high temperatures between 200°C and 250°C, but also when they are applied to the desired building application, and further during regular use which is often associated with harsh conditions (heat, cold, moisture) and mechanical stress.

Therefore, there is an ongoing desire for improved reinforced nonwovens for the production of bituminous materials, which overcome the above mentioned problems. Specifically, it would be desirable to provide improved reinforced nonwovens, which have an increased stability and are relatively easily available.

### Problem underlying the invention

The problem underlying the invention is to provide materials, such as reinforced nonwovens and building materials, as well as methods and uses, which overcome the above mentioned problems.

Specifically, the problem is to provide improved materials, such as reinforced nonwovens, which have a high strength under various types of mechanical stresses. Specifically, the nonwoven materials should have high strength against damages, for example a high tensile strength and tenacity. Moreover, they should have a high strength against punctiform damage, especially by damage from fixing means, such as nails, screws or tackers. More specifically, the material should have high nail tear strength.

Moreover, the materials should combine high strength with high elasticity and flexibility, such that they can be supplied in the form of rolls or bands for use in standard building applications.

It is a further problem underlying the invention to provide materials, which can be produced conveniently in a standard and continuous process. The process shall require a relatively low amount of process steps. Labour-intensive post-processing steps, such as lamination or adhesion steps, should be avoided. Preferably, the reinforced nonwoven shall be obtainable in a continuous process a single step from conventional starting materials.

Specifically, the production process shall provide a large variety of products, which can be adapted to the specific requirements in the building application.

### Disclosure of the invention

Surprisingly, it was found that the problem underlying the invention is overcome by nonwoven fabrics, methods, building materials and uses according to the claims. Further embodiments are outlined throughout the description.

The invention relates to a nonwoven fabric for use as a support for producing bituminous building materials, wherein the nonwoven fabric is reinforced by a plurality of yarns which are embedded in the nonwoven fabric, wherein the nonwoven fabric comprises yarns which have a curved path.

Subject of the invention is a nonwoven fabric for use as a support for producing bituminous building materials, wherein the nonwoven fabric is a composite material comprising at least a nonwoven material and a plurality of reinforcing yarns which are embedded in the nonwoven fabric, wherein the yarns comprise curved yarns which have a curved path as determined from a top view of the nonwoven fabric, wherein the nonwoven fabric does not comprise yarns, which are knitted, woven or connected by interlocking loops, wherein the fibers of the nonwoven and/or the yarns are made from polyester, wherein the nonwoven fabric is chemically, thermally and/or mechanically bonded, wherein the path of the curved yarn is sinusoidal, wherein the sinusoid is characterized by:
- a peak-to-peak amplitude between 10 mm and 300 mm, and/or
- a period between 10 mm and 400 mm,
and/or wherein the sinusoid of two adjacent curved yarns is characterized by
- a phase shift to the sinusoid of another curved yarn in the nonwoven fabric between 0.2 π to 1.8 π, and/or
- a vertical shift between 10 mm and 200 mm.

As used herein, the term "nonwoven fabric" relates to a textile material comprising a nonwoven. According to the invention, the nonwoven fabric is reinforced by a plurality of yarns. As used herein, the term "yarns" refers to a long continuous length of interlocked fibers or filaments.

The yarns are embedded in the nonwoven fabric. This means that the yarns are not attached to the surface of the nonwoven fabric. Instead, the yarn threads are in the interior of the nonwoven fabric. However, this does not necessarily imply that the yarn is not visible any more from a top view. Since the nonwoven may be thin or highly porous, the yarns may be visible form a top view. Overall, the nonwoven fabric is a composite material comprising at least a nonwoven material and the yarns.

The nonwoven fabric comprises yarns which have a curved path. As used herein, the term "path" with regard to the yarn refers to the course of the individual yarn in the nonwoven fabric. The path is determined from a top view. Unless specifically noted otherwise, also all embodiments described in this application relating to yarn paths and patterns refer to a top view.

Overall, the nonwoven fabric has the form of a sheet. The sheet can be provided in the form of a roll. Preferably, the curved yarns, or a plurality of the curved yarns, are assembled in a layer within the nonwoven fabric. Preferably, the curved yarns, or a plurality of the curved yarns, form a layer in which they are aligned to each other, preferably in parallel. In this regard, two or more of such layers of yarns could be stacked. For example, the number of stacked yarn layers could be from 2 to 10, preferably from 2 to 5, more preferably 2, 3 or 4. Preferably, the curved yarns are not arranged in a random structure, as in a nonwoven yarn layer. However, due to the nature of such yarns and nonwoven materials, they may have a slightly uneven path.

In a preferred embodiment, all yarns in the nonwoven fabric are aligned in the same main direction (machine direction).

Throughout this application, the yarns which have a curved path are referred to as "curved yarns". This means that the path of the yarn in the nonwoven fabric is curved. It does not imply that the original yarn, which was used for producing the yarn reinforcement, should be curved in any way. Rather, conventional yarns having a sufficient strength for the intended application can be used.

The curved yarn has a curvature. According to the invention, the curvature is not negligible. The curvature is intentional. It is not simply a result of an inaccurate production process. It is not a result of a minor variation obtained in a failed attempt to produce straight reinforcing lines or a scrim by a standard method. Naturally, conventional reinforcements by straight yarns or yarn scrims may have a small, negligible curvature, which results from the intrinsic flexibility of such yarns.

Preferably, at least a portion of the curved yarn has a curvature of at least 10°, preferably at least 20°, or more preferably at least 45°. Moreover, the complete path of the curved yarn has a curvature of at least 10°, preferably at least 20°, more preferably at least 30°, at any position of the curved yarn in the nonwoven fabric.

Preferably, the entire path of the curved yarn within the nonwoven fabric is curved. This means that the curved yarn in the nonwoven fabric has an overall curved pathway, and that there are no sub-sections of the yarn which are straight. Typically, the path of each yarn comprises multiple curves in alternating directions, typically at least 2, at least 5 or at least 10 curves. The total number of curves of a yarn path depends *inter alia* from the length of the nonwoven fabric and the enclosed yarn.

The yarns reinforce the nonwoven fabric. This means that under defined conditions, the nonwoven fabric with the yarn has a higher mechanical strength than a comparative nonwoven fabric without the yarn. Typically, the titer of the yarn is higher than the titer of the fibers of the nonwoven fabric. Preferably, the titer of the yarn is significantly higher, for example at least 10fold, at least 50fold or at least 100 fold higher than the titer of the fibers of the nonwoven fabric.

In a preferred embodiment, the nonwoven fabric comprises curved yarns, which overlap each other. Preferably, all curved yarns in the nonwoven fabric overlap with at least on other curved yarn. More preferably, each curved yarn overlaps with more than one other curved yarn, preferably with 2 to 20, more preferably with 3 to 10 other curved yarns. According to the invention, it was found that by such overlaps, the mechanical strength of the nonwoven fabric can be increased significantly.

The curved yarns are not connected to each other by interlocking loops. Thus, the yarns are not knitted or woven. They are not included in the form of a net. The nonwoven fabric does not comprise yarns, which are knitted, woven or connected by interlocking loops.

Preferably, the yarns are not connected to each other before the nonwoven fabric is formed from its components. Thus, they are not included into the nonwoven fabric in the form of a scrim or other layer, in which yarns are attached to each other. Nonetheless, the yarns can be adhered to each other after the nonwoven fabric is formed, especially by impregnation with a binder.

Preferably, the length of the nonwoven fabric is relatively large in the main direction (machine direction, MD), such that the nonwoven fabric can be provided in the form of a continuous roll or band. The extension in the main direction is defined as the length of the nonwoven fabric. The width in normally cross direction (CD) is significantly narrower, when the nonwoven fabric is produced in a continuous process in the form of a band and/or roll. Preferably the length of the nonwoven fabric in the machine direction is high, if it is produced in a continuous process, for example at least 100 m. Typically, the width of the nonwoven fabric in cross direction is between 10 cm and 10 m, preferably between 50 cm and 5 m. In preferred embodiments, the width could be 1, 2, 3 or 4 m, most preferably 1 m.

In a preferred embodiment, the main direction of the curved yarn is the machine direction and the path of the curved yarn is variable in the cross direction. In this regard, the "main direction" is the overall direction in which path of the curved yarn extends from one end of the nonwoven fabric to the other end. Preferably, this main direction of the yarn is the machine direction. In cross direction, the curved yarn can have a variable, curved structure. Typically, the variability of the curved yarn in the cross direction is relatively small, for example between 10 mm and 200 mm. Therefore, a single curved yarn typically does not extend from lateral side of the nonwoven fabric to the other in cross direction.

The path of the curved yarn is sinusoidal. Therefore, the path is a sine wave or sinusoid. A sinusoid is a mathematical curve that describes a continuous wave. The sinusoid is characterized by repetitive maxima and minima. The distance between adjacent maxima is the period. The height difference between a maximum or minimum to the center line is the amplitude. The height difference between a maximum and an adjacent minimum is the peak-to-peak amplitude (which is twice the amplitude in a regular sinusoid). If two sinusoids are aligned, the difference between the maxima is the phase shift. If parallel sinusoids are aligned at a distance from each other, the vertical shift is the distance between two maxima in the transverse direction.

Preferably, the sinusoidal path of the curved yarn is regular. Thus, it is characterized by repetitive sections having the same period and amplitude. However, it must be taken into account that in the technical field of textile productions, such curves and paths are normally not as precise as in mathematics. Therefore, the skilled person in the technical field will recognize that the description of a yarn path as "sinusoidal" describes the concrete structure only in approximation. Mathematically, the path is rather "essentially" sinusoidal. Typically, the path of a curved yarn in a nonwoven fabric has minor irregularities, which result from the production process and the intrinsic flexibility of the yarns and other materials. For example, an irregularity in yarn diameter or texture, or a minor defect of the production device can result in a slightly uneven path of the laid yarns. In fact, it is practically observed that a yarn path in the form of a sinusoid may have minor kinks or bends, especially after maxima or minima of a sinusoid path. These may be caused in the production process, when the response of the yarn to a rapid change of direction of yarn feeding means is delayed.

In a preferred embodiment, the nonwoven fabric comprises two or more curved yarns, which have each a sinusoidal path, which are aligned in the same direction, and which have a phase shift with respect to each other. In this embodiment, the sinusoids are preferably identical except for the phase shift.

The sinusoids are shifted when the phase shift is larger than 0 and less than 2 π. Preferably, the phase shift is significant, such as between 0.2 π and 1.8 π, especially between 0.5 π and 1.4 π. Preferably, the two or more curved yarns having a phase shift overlap each other. According to the invention, it was found that multiple yarns having a phase shift, especially when they are overlapping, form areas enclosed by the overlapping yarns, thereby increasing the mechanical strength of the nonwoven fabric, especially with respect to punctiform damage.

In a preferred embodiment, the nonwoven fabric comprises two or more curved yarns, which are aligned in parallel, have the same period and no phase shift, and have a vertical shift. In this embodiment, the two or more curved yarns do not have a phase shift. Preferably, a plurality of such yarns is present, which are at equidistant positions in the nonwoven fabric. Thereby, an overall pattern can be created throughout the nonwoven fabric which leads to an increased mechanical strength at any position.

Preferably, a plurality of curved yarns having the same period and no phase shift, which have a vertical shift, are combined with a plurality of curved yarns, which have a phase shift. Preferably, all these yarns have the same period. More preferably, all these curved yarns are arranged such that each yarn overlaps with other yarns. Preferably, a plurality of such yarns is present, which are at equidistant positions in the nonwoven fabric. According to the invention, it was found that in such an arrangement, an overall pattern can be formed which significantly increases the mechanical strength of the nonwoven fabric, especially with respect to punctiform damage, especially after damage of the nonwoven fabric by a nail or the like.

Preferably, a plurality of curved yarns as defined above is distributed all throughout the nonwoven fabric. Therefore, an overall pattern is obtainable, such that the advantageous properties can be obtained at any position of the fabric.

The sinusoid of a curved yarn is characterized by
- a peak-to-peak amplitude between 10 mm and 300 mm, preferably between 20 mm and 200 mm, more preferably between 40 mm and 120 mm, and/or
- a period between 10 mm and 400 mm, preferably between 30 mm and 300 mm, more preferably between 80 mm and 250 mm,
and/or the sinusoid of two adjacent curved yarns is characterized by
- a phase shift between 0.2 π to 1.8 π, preferably between 0.5 π to 1.5 π, and/or
- a vertical shift between 5 mm and 200 mm, preferably between 10 mm and 150 mm, more preferably between 15 mm and 100 mm.

Preferably, the curved yarns are arranged such that an overall pattern is obtained, which from a top view comprises sections of the nonwoven fabric enclosed by two or more curved yarns each. The enclosed sections could be enclosed by two adjacent yarns, three adjacent yarns or for adjacent yarns, depending on the paths of the single curved yarns.

In a preferred embodiment, the curved yarns are arranged in a pattern such that the average area which is enclosed by curved yarns, when seen from a top view, is between 10 mm² and 2500 mm², preferably between 20 mm² and 500 mm². Without being bound to theory, it is assumed that such a pattern of areas enclosed by curved yarns having curvatures in different directions, enhances mechanical strengths after punctiform damage, as indicated by the nail tear strength.

In an embodiment of the invention, all yarns present in the nonwoven fabric are curved yarns. In a preferred embodiment, additional yarns are present which are not curved. In a preferred embodiment, the nonwoven fabric comprises curved yarns and straight yarns. Preferably, the straight yarns are aligned to each other in parallel, more preferably as equidistant parallel lines. Such an arrangement is advantageous, because it may confer additional reinforcement of the nonwoven fabric in the direction, which is perpendicular to the straight yarns.

In a preferred embodiment, the nonwoven fabric comprises a plurality of parallel straight yarns, wherein the path of the straight yarns is in machine direction. Such additional straight yarns in machine direction can be obtained in a simple process, in which the straight yarn is fed continuously from fixed feeding means between the nonwovens and above or beneath the curved yarns.

In a preferred embodiment, the straight yarns overlap the curved yarns. Preferably, a pattern is obtained, in which all straight yarns overlap with curved yarns, and all curved yarns overlap with straight yarns. In this embodiment, it is preferred that all curved yarns overlap with other curved yarns having a phase shift. Overall, a dense pattern can be created which confers high mechanical strength upon punctiform rupture to the nonwoven fabric, as well as high mechanical strength in the cross direction.

In another preferred embodiment, additional straight yarns are present, which are aligned in parallel in the cross direction. In this embodiment, an additional reinforcement can be provided in the machine direction.

In a further embodiment, additional yarns, which are not curved yarns, may be provided in the form of scrims or nets.

Preferably, the amount of curved yarns with respect to all yarns present is at least 25 %, more preferably at least 50 % or at least 75 %, based on the total number of yarns.

In principle, different yarns in the nonwoven fabric could be identical or different from each other. For example, they could have different diameters and/or consist of different materials.

Preferably, the curved yarns are present within the nonwoven fabric in a layer. Typically, such an arrangement can be achieved when two separate nonwovens are combined with the yarns positioned in between. Preferably, the curved yarns are provided in a layer, whereas additional yarns, such as straight yarns, are provided in another layer, especially directly adjacent to the curved yarns on top and/or below.

The nonwoven fabric may comprise multiple layers of each component, for example multiple nonwoven layers and/or multiple layers of curved yarns and/or straight yarns.

In a preferred embodiment, the nonwoven fabric comprises:
(A) two outer nonwovens having an inner and an outer surface,
(B) two outer reinforcements of curved yarns adjacent to the inner surfaces of the outer nonwovens, wherein the main direction of the curved yarn is machine direction and the path of the curved yarn is variable in cross direction, and
(C) an inner reinforcement of parallel straight yarns arranged in machine direction, which is positioned between the outer reinforcements.

In principle, the two nonwovens in the nonwoven fabric could be identical or different from each other. For example, they could have different base weights and/or consist of different materials.

The curved yarn has a structure and composition such that it can increase the mechanical strength of the nonwoven. Preferably, the curved yarn has a titer between 100 dtex and 3,000 dtex, more preferably between 500 dtex and 2,000 dtex. Preferably, it has a high tenacity, such as more than 1 cN/dtex, preferably more than 3 cN/dtex.

The nonwoven fabric should comprise a number and density of yarns, such that a sufficient increase of the mechanical strength is achieved. Preferably, the number of curved yarns and/or straight yarns in cross direction is between 10 and 1,000 per meter, more preferably between 20 and 200 per meter. Preferably, the total base weight of the curved yarns in the nonwoven fabric is between 1 and 50 g/m², more preferably between 2 and 20 g/m², and especially between 3 and 15 g/m². It is highly preferred that the base weight is below 20 g/m² or below 10 g/m². Accordingly, it was found that a high strength can be achieved with a relatively low amount of reinforcing material.

The additional straight yarn could be provided with a titer, tenacity, number per meter and/or base weight as described above for the curved yarns.

As used herein, the term nonwoven relates to a fabric as understood and defined in the technical field, for example by ISO standard 9092. Thus, the nonwoven is a manufactured sheet, web, or batt from directionally or randomly oriented fibres bonded by friction and/or cohesion and/or adhesion, excluding paper and products that are woven, knitted, tufted stitchbonded, or felted by wet-milling, whether or not additionally needled. Preferably, the nonwoven should comprise at least 50% by weight, more preferably at least 80% or 90% by weight of the fibres or filaments. Preferably, the fibers are randomly oriented.

The nonwovens used for producing the reinforced nonwoven fabric could be conventional nonwovens obtained from staple fibers or continuous filaments, which are typically used for producing bituminous membranes. The base weight of a nonwoven layer is preferably between 10 g/cm² and 200 g/cm², more preferably between 20 g/cm² and 100 g/m², especially if two nonwoven layers are used for producing the nonwoven fabric. As used herein, the base weight is preferably determined according to ISO 29073.

Preferably, the overall base weight of a nonwoven fabric is between 20 g/cm² and 400 g/cm², more preferably between 50 g/cm² and 300 g/m², and especially between 100 g/cm² and 200 g/m².

The fibers of the nonwoven and/or the yarns are made from polyester. The yarns and the nonwoven fiber and filaments which are not made from polyester could be from any material which is applicable in the production of bituminous supports. Preferably, the nonwovens and/or yarns are made from synthetic polymers. Polymers for bituminous applications should be stable up to relatively high temperatures of 200°C to 250°C in order to have sufficient stability in the bitumen impregnation process. In another embodiment, the yarns, especially the straight yarns, can be made from inorganic materials, such as fiberglass.

The fibers of the nonwoven and/or the yarns are made from polyester. Polyesters are commonly used for producing supports for bituminous membranes, because they have a high temperature and dimensional stability. The fibers which are not made from polyester may consist of or comprise other synthetic polymers, such as polyolefins or polyamides. Preferably, the yarns comprise only polyester as fiber-forming materials. The synthetic polymers are the fiber forming materials. However, the polymer fibers or filaments may comprise other components, especially low molecular weight additives, such as processing aids from the production process or functional components, such as colorants.

In a preferred embodiment, the nonwovens and the curved yarns are made from polyester, whereas the straight yarns are made from inorganic materials, such as fiberglass.

In a preferred embodiment, the yarns and/or nonwovens comprise multicomponent fibers, preferably bicomponent fibers. Preferably, the multi-component fibers have a component having a relatively low melting point and a component having a relatively high melting point. Such materials can be easily stabilized by thermal bonding, especially by calendering.

Preferably, the nonwoven fabric is thermostabilized under heat, for example by passing through hot rolls at a temperature of 240°C. During thermostabilization, the overall structure of the nonwoven is modified without melting of the fibers.

The fabric is thermally, chemically and/or mechanically bonded.

Preferably, the nonwoven fabric is mechanically bonded. Mechanical bonding can be carried out by conventional means, such as needling and/or hydro-entanglement.

The nonwoven fabric could be thermally bonded. Preferably, thermal bonding is carried out by calendering, especially if a low-melt component is present in the nonwoven fabric.

In a preferred embodiment, the nonwoven fabric chemically bonded. Typically, chemical bonding is carried out with a binder, preferably a polymer resin. In such a standard method, the nonwoven fabric is impregnated with a liquid binder or binder solution or suspension, followed by drying and solidifying. Methods for impregnating nonwoven fabrics for bituminous membranes with polymer binders are known in the art. For example, a cross-linkable acrylic binder can be used in combination with a cross-linker, such as melamine, phenol formaldehyde or urea formaldehyde. Other applicable binder systems comprise styrene-butadiene rubber, epoxy binders or the like.

Preferably, the nonwoven fabric is mechanically bonded by needling and chemically bonded by impregnation with a binder.

The nonwoven fabric is characterized by a high mechanical strength. Preferably, the maximum tensile strength in machine direction and cross direction (MD and CD) is at least 150 N, more preferably at least 175 N, as determined by ISO 29073. Preferably, the maximum tensile strength in machine direction is at least 300 N, more preferably at least 350 N, as determined by ISO 29073.

The nonwoven fabric is characterized by a high tenacity. Preferably, the maximum tenacity in MD and CD is at least 1.0 (N/5 cm)/(g/m²), wherein the tenacity is the maximum tensile strength according to ISO 29073 normalized versus the base weight. Preferably, the maximum tenacity in MD is at least 2.0 (N/5 cm)/(g/m²), more preferably at least 3.0 (N/5 cm)/(g/m²).

Typically, the nonwoven fabric is characterized by a strength after puncture with a nail or other fixing means. Preferably, the nail tear strength in MD and CD is at least 100 N, more preferably at least 140 N, as determined by EN 12310-1 (2001). Preferably, the nail tear strength in MD is at least 150 N, more preferably at least 200 N. Preferably, the nail tear tenacity in MD and CD is at least 0.9 (N/5 cm)/(g/m²) more preferably at least 1.0 (N/5 cm)/(g/m²). Preferably, the nail tear tenacity in MD is at least 1.2 (N/5 cm)/(g/m²).

The inventive nonwoven fabric may be produced by any conventional methods. In principle, known lamination techniques can be combined with yarn feeding and laying techniques. Accordingly, the yarns can be laid between an outer and inner nonwoven, followed by lamination to obtain the nonwoven fabric. The nonwoven fabric could be obtained by a continuous or non-continuous process. It is highly preferred that the nonwoven fabric is produced in a continuous method.

In a highly preferred embodiment, nonwoven fabrics are produced in a method, in which the individual yarns are fed into the forming nonwoven fabric. Preferably, the feeding means deliver a pre-formed yarn, preferably from bobbins. Preferably, the feeding means is a creel with bobbins. Such a process, in which individual yarns are fed into the fabric from bobbins in a continuous process, can lead to a characteristic structure in which the paths of the individual yarns can be aligned and controlled. In another embodiment, the yarn is continuously produced by spinning from fibers or filaments and fed into the process.

Subject of the invention is also a continuous method for producing the inventive nonwoven fabric, comprising the steps of
(a) providing a first nonwoven and a second nonwoven into a first direction,
(b) feeding at least one yarn from yarn feeding means into the first direction, such that the yarn is positioned between the first and the second nonwoven, wherein the feeding means are movable laterally to the first direction and move back and forth, such that a curved yarn is obtained, and
(c) bringing the first and second nonwoven in contact with each other, such that a nonwoven fabric is obtained with the curved yarn between the nonwovens.

Overall, the method is a continuous method. In the production line, the nonwovens and yarns are in continuous movement in the machine direction. This means that the main components, which are the first and second nonwoven and the yarns, are fed into the process in a continuous production line, in which they are combined to the nonwoven fabric. Thereby, a continuous band of the nonwoven fabric is obtainable without interruption of the process.

In step (a) described above, the first and second nonwoven, which become the top and bottom layer of the nonwoven fabric, are fed continuously into the production line. The nonwovens can be continuously fed into the process from unwinding rolls. In a preferred embodiment, the nonwovens are produced from fibers in a preceding step in the same process, such as a carding or spunbonding method.

In step (b), the yarns are provided into the process in a manner such that the curved path is formed between the first and second nonwoven. This can be achieved by feeding means, which move to and repetitive, a sinusoidal path is formed for each curved yarn.

In a preferred embodiment, the method further comprises continuously feeding at least one additional yarn into the first direction, between the first and the second nonwoven, from fixed feeding means, which are not movable laterally to the first direction. Thereby, an additional straight yarn is obtained. Preferably, the straight lines are fed between the nonwovens at a height, such that they are above or beneath the level of curved yarns. More preferably, a level of straight yarns is formed between two levels of curved yarns.

The yarns are fed into a "gap" between the pair of opposite nonwovens. When the yarns have reached a position in machine direction, where they adapt the desired form and path, or thereafter, the first and second nonwoven are merged. They close the gap between them and embed the yarns in a fixed position and path in the interior of the nonwoven fabric.

The nonwoven fabric is a composite material. As noted above, the nonwoven fabric may comprise layers, such as two nonwoven layers between which the yarns are embedded. Preferably, the yarns are not adhered to each other before the nonwoven fabric is formed. Accordingly, their structure can be relatively loose. Thus, they typically do not form a discrete "yarn layer", which could be handled and processed independently. Therefore, the product is preferably not formed by laminating all discrete pre-formed layers, including a pre-formed yarn layer, together.

Preferably, the nonwoven fabric is a laminate, which consists of the nonwoven fabric and the reinforcing yarns. Preferably, the nonwoven fabric does not comprise a film layer, a paper layer, a woven layer, a knitted layer, a net or a scrim. It was found that the advantageous properties can be obtained without such layers.

Subject of this disclosure is also a device comprising
(i) means for providing a first nonwoven and a second nonwoven into a first direction,
(ii) movable feeding means for feeding at least one yarn into the first direction, such that the yarn is positioned between the first and the second nonwoven, wherein the feeding means are movable laterally to the first direction and move back and forth, such that a curved yarn is obtained, and
(iii) means for bringing the first and second nonwoven in contact with each other, such that a nonwoven fabric is obtained with the curved yarn between the nonwovens.

The device is usable for carrying out the method of the invention and producing the nonwoven fabric of the invention. In a preferred embodiment, the device further comprises fixed feeding means for feeding at least one additional yarn into the first direction, between the first and the second nonwoven, which do not move laterally to the first direction. Thereby, an additional straight yarn can be obtained.

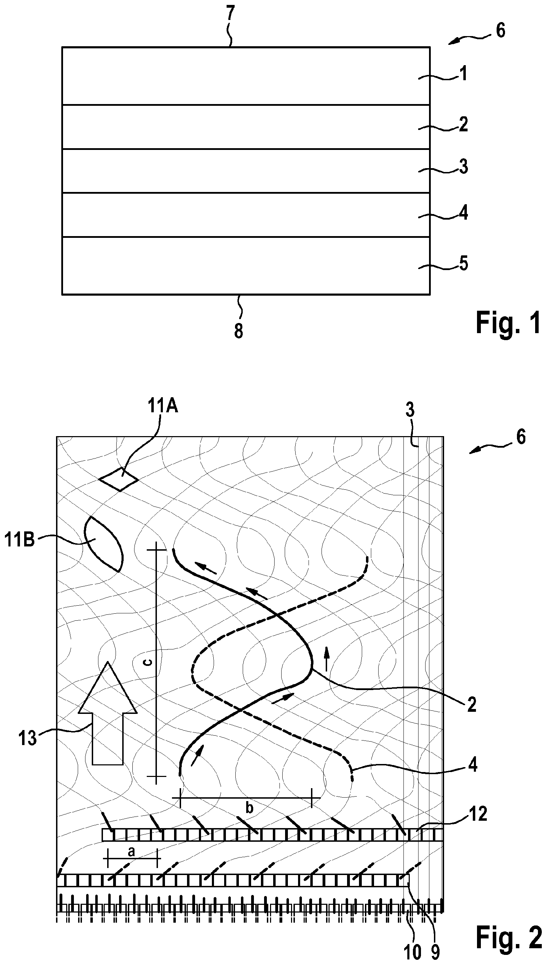

Exemplary embodiments of inventive nonwoven fabrics are shown in **FIG. 1** (cross section) and **FIG. 2** (top view). The dimensions and layers do not correspond to the real dimensions and structures of the components.

**FIG. 1** shows a cross-section of an exemplary nonwoven fabric 6 of the invention with a first surface 7 and a second surface 8. The outer layers are formed of nonwovens 1 and 5, between which yarn reinforcements 2, 3 and 4 are embedded. In a preferred embodiment, a central layer of straight, parallel yarns 3 is positioned between two adjacent layers of curved yarns 2, 4. The layers of curved yarns 2, 4 are adjacent to the nonwoven layers 1 and 5. Preferably, all curved yarns in layers 2 and 4 are aligned in sinusoids in the same main direction (MD) and have the same amplitude. Preferably, the curved yarns in layer 2 have the same phase, whereas the curved yarns in layer 4 have a phase shift with respect to the yarns in layer 2. Thereby, a structure can be obtained in which sections of yarns in layers 2 and 4 overlap each other.

**FIG. 2** shows a top view of the exemplary nonwoven fabric 6 of **FIG. 1** together with exemplary feeding means 12, 9 and 10 for feeding the curved yarns 2, 4 and the straight yarns 3 into the composite fabric into machine direction 13. Thus, the emerging nonwoven fabric is shown during its production process. The curved yarns 2 and 4 can be fed from creels 12 and 9 from a plurality of feeding means. A plurality of curved yarns 2 is aligned in the first layer 2 of curved yarns. Curved yarns 2 have the same amplitude **b**, phase **c** and a vertical shift **a** with respect to each other. The first layer of curved yarns 2 can be fed from creel 12. The second layer of curved yarns 4 can be provided from creel 9. The curved yarns 4 have the same amplitude, phase and a vertical shift with respect to each other, which are preferably the same as for curved yarns 2. Further, curved yarns 4 have a phase shift as curved yarns 2, which is approximately 180° (π) in the embodiment shown. Thus, the sinusoid of curved yarns 2 is approximately at a minimum when the sinusoid of curved yarns 4 is at a maximum and vice versa. Thereby, an overall pattern of curved yarns is obtained which comprises areas such as 11A, 11B enclosed by a curved yarn 1 and a curved yarn 4. In the production process, the creels 12 and 9 move back and forth laterally to the machine direction 13, such that the sinusoidal patterns of curved yarns 2 and 4 are formed. In addition, straight yarns 3 are present in a layer 3, which are fed from a creel 10 with fixed feeding means. For a better overview, only three exemplary straight yarns 3 are shown on the right side. However, the nonwoven fabric is typically reinforced with such straight yarns 3, which are provided from the feeding means of creel 10, over its complete width. In the embodiment shown in **FIG. 2****,** all curved yarns could have a peak-to-peak amplitude **b** (transverse amplitude, in cross direction) of 70 mm, a phase **c** of 140 mm and a vertical phase shift **a** to the next parallel yarn of 32 mm.

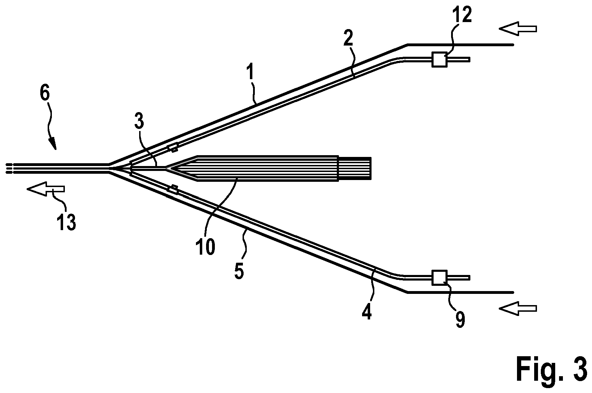

**FIG. 3** shows a side view of an exemplary device and process of the invention. The device for producing the nonwoven fabric 6 provides nonwoven layers 1 and 5 in machine direction 13. Creels 9, 12 with pluralities of feeding means provide curved yarns 2 and 4 in the same direction. The creels 9, 12 and feeding means move laterally back and forth perpendicular to and outside the plane of the side view. In addition, straight yarns 3 are fed in machine direction 13 from fixed feeding means 10. Overall, the yarns are laid between the nonwoven fabrics, such that a composite structure is obtained as shown in **FIG. 1** and **2** and outlined above. Overall, an endless band of nonwoven fabric 6 can be obtained in a continuous process.

Subject of the invention is also a building material, preferably a roofing material or a geotextile, comprising a nonwoven fabric of the invention impregnated with bitumen. Thus, the nonwoven fabric is a support (substrate, carrier) for impregnation with the bitumen. Preferably, the nonwoven fabric was impregnated before with a binder, before it is subjected to impregnation with bitumen. Typically, the nonwoven fabric is impregnated with molten bitumen at a temperature between 160°C and 250°C, often between 175°C and 200°C, followed by solidification. It must have sufficient thermal and mechanical stability, such that it is not destroyed in such a processing step. The bituminous building material (bituminous membranes) can be used for standard roofing applications for covering roofs or as geotextiles. Typically, such bituminous building materials are provided in the form of flexible rolls or bands.

Subject of the invention is also the use of the inventive nonwoven fabric as a support for a building material, preferably a roofing material, or as a geotextile.

The inventive nonwoven fabric, building materials, methods and uses solve the problems underlying the invention. The nonwoven fabric has a high mechanical strength, for example with regard to tensile strength or tenacity. However, the specific reinforcement with curved yarns provides additional strength to the material, which is not observed for conventional materials. Specifically, the curved reinforcements provide stability against punctiform or irregular damages, as indicated by a very high nail tear strength. The high nail tear strength indicates that the material is not prone to further damage, especially by tearing, after a nail is driven through the material. This is highly advantageous in roofing or geotextile applications, wherein such materials are fixed and combined with nails, screws, tackers or the like. A high nail tear strength also indicates that the material has a high stability against irregular damages caused by stones, branches, metal parts or the like. At the same time, the material can have a high elasticity, which is important for standard uses as support for bituminous materials and building materials.

Further, a production method is provided for producing the nonwoven fabric in a relatively simple and continuous process. With movable yarn feeding means, various patterns of curved yarns are obtainable, which can be adapted to the specific requirements of the application. The method allows use of a large variety of yarns or filaments, with respect to strength, material or the like. Further, different yarns or filaments can be introduced into a nonwoven fabric. The nonwoven fabric has a high strength and consolidation in cross direction. The inventive advantages can be achieved with relatively low amounts of reinforcing yarns. The inventive method also reduces or even eliminates the risk of slipping of longitudinal reinforcement yarns, which is frequently observed under conventional high stress manufacturing conditions. In view of the inherent relatively high stability of the nonwoven fabric with reinforcing yarns, only relatively low amounts of polymer binder are required for obtaining substrates for bituminous membranes. Overall, the nonwoven fabric and inventive method allow a simple, cost-efficient and continuous production of the nonwoven fabric. The method is not labour-intensive and highly flexible. Further, nonwoven fabrics can be obtained which have a high stability in the machine and cross direction.

Exemplified embodiments of the invention and aspects of the invention are shown in the figures.
Figure 1 shows schematically and in exemplified form
Figure 2 shows schematically and in exemplified form

### Examples

### Examples 1 to 3: Production of nonwoven fabrics

Three nonwoven fabrics reinforced with different yarns were prepared as described in the following. The inventive nonwoven fabrics of examples 2 and 3 were produced with a structure as shown schematically in FIG 1 and FIG. 2. The nonwoven fabric comprised two outer nonwoven layers with reinforcing yarn embedded between them. Adjacent to the outer nonwoven layers were two outer reinforcement layers made from curved yarns. Between the outer reinforcement layers, an inner reinforcement layer of longitudinal yarns was positioned, which were aligned orthogonal to the main direction of the curved yarns. In comparative example 1, the outer reinforcements 2 and 4 with curved yarns were omitted such that the nonwoven fabric was only reinforced by the longitudinal yarn 3.

The components were combined to a nonwoven fabric with a device comprising means for laying the top and bottom nonwovens and means for feeding the pre-formed yarns from creels comprising a bobbin for each individual yarn. Two nonwovens were continuously fed into the process from rolls. The yarns were fed from feeding means between the two nonwovens before they contacted each other. The feeder comprised rigid yarn feeding means for providing the longitudinal yarn and movable yarn feeding means, which continuously moved to and fro in cross direction, for providing the curved yarns.

### Nonwoven layers

The top and bottom nonwoven layers were pre-fabricated and consisted of 4.4 dtex 76 mm length staple fibers made from polyester (recycled polyethylene terephthalate; rPET), which had been opened, mixed, carded and cross-laid. Each nonwoven had a base weight of approximately 55 g/m².

### Longitudinal yarn

One creel of the yarn feeder supported 130 active bobbins / meter (in cross direction) for feeding a glass yarn type E, titer 68 dtex. Feeding of the yarn was carried out from one array of fixed metal pipes oriented in the machine direction and equally aligned in parallel. Each pipe guided a single yarn and had an internal diameter of 4 mm and a thickness of 1 mm at a mutual yarn-yarn-distance of 7.7 mm. Each pipe was fed by a single yarn from one bobbin of the creel and releases the yarn out of the pipe into the product. The creel was equipped so that each pipe could be fed by one pair of alternative bobbins, so that before one bobbin was ending, the second one was connected with the former end, resulting in a continuous process. An array of parallel yarns was obtained in the machine direction, which was directly fed into the emerging composite in the yarn feeding direction. The total area weight of the longitudinal yarn was 9 gram/m².

### Curved yarn:

One creel for feeding the curved yarn supported a maximum of 124 active bobbins per meter (in cross direction). Of these, 31 active bobbins were used in the process. In example 1, a high tenacity polyester yarn was used having a titer of 1,100 dtex and a maximum tenacity of 8.0 cN/dtex. In example 2, a sewing thread of polyester (3 yarns twisted "Z") having a titer of 1.000 dtex and a maximum tenacity of 3.4 cN/dtex was used. One creel fed a motor-driven cross-sliding array ("traverse") of metal pipes oriented in the machine direction and equally aligned to each other in parallel. Each pipe consisted of a rigid metal part, which was assembled in the releasing array, which each was connected to a flexible pipe, which was inserted into the rigid part in order to adapt the moving array to the fixed creel. Each pipe guided a single yarn and had an internal diameter of 4 mm and a thickness of 1 mm, at a mutual yarn distance of 32 mm. Each pipe was fed by one yarn coming from one bobbin of the creel and released the yarn out of the pipe into the product. The creel was equipped so that each pipe could be fed by one pair of alternative bobbins, so that before one bobbin was ending, the second one was connected with the former end, resulting in a continuous process. Because the array moves continuously from the left to the right and then back from the right to the left, a pattern of parallel waves of curved yarns is obtained while the product is moving in the machine direction. The main extension of the yarn is in the machine direction, whereas the waves are formed in the cross direction in a sinusoidal pattern.

The pattern of the curved yarns was created by a computer program with the following parameters. The peak-to-peak amplitude (transverse amplitude, in cross direction) was 70 mm. The phase (in machine direction) was 140 mm. The waveform was sinusoidal. The layers' phase was such that layer 2 was synchronized with layer 4 to have a phase shift of 180° (1 π), In other words, when the curve of a yarn in layer 2 was at a maximum, the respective curve of a yarn of layer 4 was at a minimum.

### Processing

The two outer nonwoven layers and reinforcing yarns were continuously fed into the device, such that the reinforced nonwoven fabric was obtained. The fabric was bonded by calendaring through two counter-rotating driven feeding metal rolls at line speed by a needle loom. Needling was carried out with a needling density of 190 stitch/cm² at a penetration depth of 10 mm. The fabric is further thermo-stabilized by pressing between two hot rolls at 240°C. Subsequently, the nonwoven fabric is impregnated and bonded with a binder in a textile machine (Foulard). The binder comprised 15% solids, which were 39 wt.% styrene-acrylic dispersion, 26 wt.% melamine-formaldehyde resin and 35 wt. % modified corn starch. The binder was cured at 190°C. Bonded nonwoven fabrics were obtained, which can be impregnated with bitumen for production of bituminous membranes.

### Example 4: Properties of nonwoven fabrics:

The properties of the nonwoven fabrics produced according to examples 1 to 3 were examined. The results are shown in table 1 below.

**Table 1: properties of nonwoven fabrics**

| **Example** | | | **1** | **2** | **3** |
|---|---|---|---|---|---|
| | **Direction** | **Unit** | | | |
| Unit mass *(ISO 29073)** | MD | g/m² | 121 | 168 | 136 |
| | CD | g/m² | 119 | 157 | 140 |
| Nail tear strength *(EN 12310-1)* | MD | N | 91 | 235 | 124 |
| | CD | N | 84 | 207 | 145 |
| Nail tear tenacity | MD | (N/5cm)/(g/m²) | 0.75 | 1.40 | 0.91 |
| | CD | (N/5cm)/(g/m²) | 0.71 | 1.32 | 1.04 |
| Unit mass *(ISO 29073)*** | MD | g/m² | 125 | 162 | 145 |
| | CD | g/m² | 120 | 163 | 144 |
| Tensile strength at max | MD | N | 337 | 379 | 374 |
| | CD | N | 127 | 174 | 200 |
| Tenacity at max | MD | (N/5cm)/(g/m²) | 2.70 | 2.34 | 2.58 |
| | CD | (N/5cm)/(g/m²) | 1.06 | 1.07 | 1.39 |
| | MD + CD | (N/5cm)/(g/m²) | 3.75 | 3.41 | 3.97 |
| Tensile strength at break | MD | N | 175 | 235 | 207 |
| Tenacity at break | MD | (N/5cm)/(g/m²) | 1.40 | 1.45 | 1.43 |
| Elongation at break | MD | % | 17 | 14 | 17 |
| | CD | % | 39 | 52 | 31 |

| | | | | | |
|---|---|---|---|---|---|
| * of specimen for determining nail tear strength and nail tear tenacity ** of specimen for determining tensile strength, tenacity and elongation | | | | | |

The results demonstrate that the mechanical properties of the inventive nonwoven fabrics of examples 2 and 3 are significantly better than the mechanical properties of the comparative example 1 without a curved yarn reinforcement. The increase in strength is larger than what would have been expected solely in view of the increase of the amount of yarns. However, an especially strong and significant effect was observed for the nail tear strength and nail tear tenacity. Practically, this means that the inventive nonwoven fabric is far more stable than a conventional nonwoven fabric after a nail or other fixing means are driven through the fabric. This is very important in practical applications as building materials or geotextiles, wherein the bituminous materials are fixated with nails, screws, staples, needles or the like. Increased nail tear strength is also indicative of a higher stability against damages by piercing and the like. Without being bound to theory, it is assumed that the curved yarns may enclose a nail, thereby enhancing the stability by preventing lateral movement.

## Claims

1. A nonwoven fabric for use as a support for producing bituminous building materials, wherein the nonwoven fabric is a composite material comprising at least a nonwoven material and a plurality of reinforcing yarns which are embedded in the nonwoven fabric, wherein the yarns comprise curved yarns which have a curved path as determined from a top view of the nonwoven fabric, wherein the nonwoven fabric does not comprise yarns, which are knitted, woven or connected by interlocking loops, wherein the fibers of the nonwoven and/or the yarns are made from polyester, wherein the nonwoven fabric is chemically, thermally and/or mechanically bonded,
wherein the path of the curved yarn is sinusoidal, wherein the sinusoid is **characterized by**:
- a peak-to-peak amplitude between 10 mm and 300 mm, and/or
- a period between 10 mm and 400 mm,
and/or wherein the sinusoid of two adjacent curved yarns is **characterized by**
- a phase shift to the sinusoid of another curved yarn in the nonwoven fabric between 0.2 π to 1.8 π, and/or
- a vertical shift between 10 mm and 200 mm.

2. The nonwoven fabric of claim 1, wherein curved yarns are comprised which overlap each other.

3. The nonwoven fabric of at least one of the preceding claims, wherein the main direction of the curved yarn is the machine direction and the path of the curved yarn is variable in the cross direction.

4. The nonwoven fabric of at least one of the preceding claims, which comprises two or more curved yarns, which have each a sinusoidal path, which are aligned in the same direction, and which have a phase shift with respect to each other.

5. The nonwoven fabric of at least one of the preceding claims, which comprises two or more curved yarns which are aligned in parallel, which have sinusoidal paths having the same period, no phase shift, and a vertical shift towards each other.

6. The nonwoven fabric of at least one of the preceding claims, which comprises curved yarns and straight yarns, wherein the nonwoven fabric preferably comprises a plurality of parallel straight yarns, wherein the path of the straight yarns is in machine direction, wherein preferably the straight yarns overlap with the curved yarns.

7. The nonwoven fabric of at least one of the preceding claims, wherein the fabric comprises:
(A) two outer nonwovens having an inner and an outer surface,
(B) two outer reinforcements of curved yarns adjacent to the inner surfaces of the outer nonwovens, wherein the main direction of the curved yarn is machine direction and the path of the curved yarn is variable in cross direction, and
(C) an inner reinforcement, which is positioned between the outer reinforcements, of parallel straight yarns arranged in machine direction.

8. The nonwoven fabric of at least one of the preceding claims, wherein the nonwoven fabric is impregnated with a binder.

9. The nonwoven fabric of at least one of the preceding claims, wherein the curved yarns are arranged in patterns such that the average area which is enclosed by curved yarns is between 10 mm² and 500 mm², and/or
wherein the nonwoven fabric has a nail tear strength of at least 100 N, preferably at least 120 N, more preferably at least 200 N, in machine direction and/or cross direction as determined by EN 12310-1.

10. A continuous method for producing a nonwoven fabric according to at least one of claims 1 to 9, comprising the steps of
(a) providing a first nonwoven and a second nonwoven into a first direction,
(b) feeding at least one yarn from yarn feeding means into the first direction, such that the yarn is positioned between the first and the second nonwoven, wherein the feeding means are movable laterally to the first direction and move back and forth, such that a curved yarn is obtained, and
(c) bringing the first and second nonwoven in contact with each other, such that a nonwoven fabric is obtained with the curved yarn between the nonwovens,
wherein the method preferably further comprises feeding at least one additional yarn into the first direction between the first and the second nonwoven, wherein the feeding means are not movable laterally to the first direction, such that a straight yarn is obtained.

11. A building material, preferably a roofing material or a geotextile, comprising a nonwoven fabric of any of claims 1 to 9, which is impregnated with bitumen.

12. Use of a nonwoven fabric of any of claims 1 to 9 as a support for a building material, preferably a roofing material or a geotextile.

## Patentansprüche

1. Vliesstoff zur Verwendung als ein Träger zur Herstellung von bituminösen Baumaterialien, wobei der Vliesstoff ein Verbundmaterial ist, das mindestens ein Vliesmaterial und eine Vielzahl von Verstärkungsgarnen umfasst, die in den Vliesstoff eingebettet sind, wobei die Garne kurvenförmige Garne umfassen, die eine kurvenförmige Bahn haben, wie aus einer Draufsicht auf den Vliesstoff bestimmt, wobei der Vliesstoff keine Garne umfasst, die durch ineinandergreifende Schlaufen verstrickt, verwebt oder verbunden sind, wobei die Fasern des Vliesstoffs und/oder die Garne aus Polyester bestehen, wobei der Vliesstoff chemisch, thermisch und/oder mechanisch gebunden ist,
wobei die Bahn des kurvenförmigen Garns sinusförmig ist, wobei die Sinuskurve **gekennzeichnet ist durch**:
- eine Spitze-Spitze-Amplitude zwischen 10 mm und 300 mm und/oder
- eine Periode zwischen 10 mm und 400 mm,
und/oder wobei die Sinuskurve zweier angrenzender kurvenförmiger Garne **gekennzeichnet ist durch**
- eine Phasenverschiebung zu der Sinuskurve eines weiteren kurvenförmigen Garns in dem Vliesstoff zwischen 0,2 π und 1,8 π, und/oder
- eine vertikale Verschiebung zwischen 10 mm und 200 mm.

2. Vliesstoff nach Anspruch 1, wobei kurvenförmige Garne umfasst sind, die einander überlappen.

3. Vliesstoff nach mindestens einem der vorhergehenden Ansprüche, wobei die Hauptrichtung des kurvenförmigen Garns die Maschinenrichtung ist und die Bahn des kurvenförmigen Garns in der Querrichtung variabel ist.

4. Vliesstoff nach mindestens einem der vorhergehenden Ansprüche, der zwei oder mehr kurvenförmige Garne umfasst, die jeweils eine sinusförmige Bahn aufweisen, die in derselben Richtung ausgerichtet sind und eine Phasenverschiebung zueinander aufweisen.

5. Vliesstoff nach mindestens einem der vorhergehenden Ansprüche, der zwei oder mehr parallel ausgerichtete kurvenförmige Garne umfasst, die sinusförmige Bahnen mit derselben Periode, ohne Phasenverschiebung, und einer vertikalen Verschiebung zueinander aufweisen.

6. Vliesstoff nach mindestens einem der vorhergehenden Ansprüche, der kurvenförmige Garne und gerade Garne umfasst, wobei der Vliesstoff vorzugsweise eine Vielzahl paralleler gerader Garne umfasst, wobei die Bahn der geraden Garne in Maschinenrichtung verläuft, wobei vorzugsweise die geraden Garne mit den kurvenförmigen Garnen überlappen.

7. Vliesstoff nach mindestens einem der vorhergehenden Ansprüche, wobei der Stoff umfasst:
(A) zwei äußere Vliese mit einer inneren und einer äußeren Oberfläche,
(B) zwei äußere Verstärkungen aus kurvenförmigen Garnen, die an die inneren Oberflächen der äußeren Vliese angrenzen, wobei die Hauptrichtung des kurvenförmigen Garns die Maschinenrichtung ist und die Bahn des kurvenförmigen Garns in Querrichtung variabel ist, und
(C) eine innere Verstärkung, die zwischen den äußeren Verstärkungen angeordnet ist, aus parallelen geraden Garnen, die in Maschinenrichtung angeordnet sind.

8. Vliesstoff nach mindestens einem der vorhergehenden Ansprüche, wobei der Vliesstoff mit einem Bindemittel imprägniert.

9. Vliesstoff nach mindestens einem der vorhergehenden Ansprüche, wobei die kurvenförmigen Garne in Mustern so angeordnet sind, dass die durchschnittliche Fläche, die von kurvenförmigen Garnen umschlossen ist, zwischen 10 mm² und 500 mm² liegt, und/oder wobei der Vliesstoff eine Nagelreißfestigkeit in Maschinenrichtung und/oder Querrichtung, bestimmt durch EN 12310-1, von mindestens 100 N, bevorzugt mindestens 120 N und mehr bevorzugt mindestens 200 N aufweist.

10. Kontinuierliches Verfahren zur Herstellung eines Vliesstoffs nach mindestens einem der Ansprüche 1 bis 9, umfassend die Schritte
(a) Bereitstellen eines ersten Vlieses und eines zweiten Vlieses in eine erste Richtung,
(b) Zuführen von mindestens einem Garn von Garnzufuhrmitteln in die erste Richtung, sodass das Garn zwischen dem ersten und dem zweiten Vliesstoff angeordnet wird, wobei die Garnzufuhrmittel seitlich zu der ersten Richtung beweglich sind und sich hin und her bewegen, sodass ein kurvenförmiges Garn erhalten wird, und
(c) Bringen des ersten und des zweiten Vlieses in Kontakt miteinander, sodass ein Vliesstoff mit dem kurvenförmigen Garn zwischen den Vliesen erhalten wird,
wobei das Verfahren bevorzugt ferner ein Zuführen mindestens eines zusätzlichen Garns in die erste Richtung zwischen das erste und das zweite Vlies umfasst, wobei die Zufuhrmittel seitlich zu der ersten Richtung nicht beweglich sind, sodass ein gerades Garn erhalten wird.

11. Baumaterial, bevorzugt ein Dachmaterial oder ein Geotextil, umfassend einen Vliesstoff nach einem der Ansprüche 1 bis 9, der mit Bitumen imprägniert ist.

12. Verwendung eines Vliesstoffs nach einem der Ansprüche 1 bis 9 als ein Träger für ein Baumaterial, bevorzugt ein Dachmaterial oder ein Geotextil.

## Revendications

1. Tissu non tissé à utiliser comme support pour la production de matériaux de construction bitumineux, le tissu non tissé étant un matériau composite comprenant au moins un matériau non tissé et une pluralité de fils de renforcement qui sont incorporés dans le tissu non tissé, les fils comprenant des fils incurvés qui ont une trajectoire incurvée, comme déterminé à partir d'une vue en plan du tissu non tissé, le tissu non tissé ne comprenant pas de fils qui sont tricotés, tissés ou reliés par des boucles d'entrecroisement, les fibres du non-tissé et/ou les fils étant fabriqués à partir de polyester, le tissu non tissé étant lié chimiquement, thermiquement et/ou mécaniquement,
dans lequel la trajectoire du fil incurvé est sinusoïdale, dans lequel la sinusoïde est **caractérisée par** :
- une amplitude de crête à crête comprise entre 10 mm et 300 mm, et/ou
- une période comprise entre 10 mm et 400 mm,
et/ou dans lequel la sinusoïde de deux fils incurvés adjacents est **caractérisée par**
- un déphasage par rapport à la sinusoïde d'un autre fil incurvé dans le tissu non tissé compris entre 0,2π et 1,8π, et/ou
- un décalage vertical compris entre 10 mm et 200 mm.

2. Tissu non tissé de la revendication 1 dans lequel sont compris des fils incurvés qui se chevauchent.

3. Tissu non tissé d'au moins une des revendications précédentes, dans lequel la direction principale du fil incurvé est la direction machine et la trajectoire du fil incurvé est variable dans la direction transversale.

4. Tissu non tissé d'au moins une des revendications précédentes, qui comprend au moins deux fils incurvés, qui ont chacun une trajectoire sinusoïdale, qui sont alignés dans la même direction, et qui ont un déphasage l'un par rapport à l'autre.

5. Tissu non tissé d'au moins une des revendications précédentes, qui comprend au moins deux fils incurvés qui sont alignés parallèlement, qui ont des trajectoires sinusoïdales ayant la même période, aucun déphasage, et un décalage vertical l'une par rapport à l'autre.

6. Tissu non tissé d'au moins une des revendications précédentes, qui comprend des fils incurvés et des fils rectilignes, le tissu non tissé comprenant de préférence une pluralité de fils rectilignes parallèles, la trajectoire des fils rectilignes étant dans la direction machine, les fils rectilignes chevauchant de préférence les fils incurvés.

7. Tissu non tissé d'au moins une des revendications précédentes, le tissu comprenant :
(A) deux non-tissés externes ayant une surface interne et externe,
(B) deux renforcements externes de fils incurvés adjacents aux surfaces internes des non-tissés externes, la direction principale du fil incurvé étant la direction machine et la trajectoire du fil incurvé étant variable dans la direction transversale, et
(C) un renforcement interne, qui est positionné entre les renforcements externes, de fils rectilignes parallèles disposés dans la direction machine.

8. Tissu non tissé d'au moins une des revendications précédentes, le tissu non tissé étant imprégné avec un liant.

9. Tissu non tissé d'au moins une des revendications précédentes, les fils incurvés étant disposés en motifs tels que l'aire moyenne qui est délimitée par des fils incurvés se situe entre 10 mm² et 500 mm², et/ou
le tissu non tissé ayant une résistance à la déchirure au clou d'au moins 100 N, de préférence au moins 120 N, mieux encore au moins 200 N, dans la direction machine et/ou la direction transversale, comme déterminé par la méthode EN 12310-1.

10. Procédé continu pour la production d'un tissu non tissé selon au moins une des revendications 1 à 9, comprenant les étapes suivantes :
(a) mise en place d'un premier non-tissé et d'un deuxième non-tissé dans une première direction,
(b) avance d'au moins un fil à partir de moyens d'avance de fil dans la première direction, de telle sorte que le fil est positionné entre le premier et le deuxième non-tissé, les moyens d'avance étant mobiles latéralement à la première direction et se déplaçant d'avant en arrière, de telle sorte qu'un fil incurvé est obtenu, et
(c) mise en contact du premier et du deuxième non-tissé, de telle sorte qu'un tissu non tissé est obtenu avec le fil incurvé entre les non-tissés,
le procédé comprenant de préférence également l'avance d'au moins un fil supplémentaire dans la première direction entre le premier et le deuxième non-tissé, les moyens d'avance n'étant pas mobiles latéralement à la première direction, de telle sorte qu'un fil rectiligne est obtenu.

11. Matériau de construction, de préférence matériau de couverture ou géotextile, comprenant un tissu non tissé de l'une quelconque des revendications 1 à 9, qui est imprégné avec du bitume.

12. Utilisation d'un tissu non tissé de l'une quelconque des revendications 1 à 9 comme support pour un matériau de construction, de préférence un matériau de couverture ou un géotextile.
